# EUROPEAN PATENT APPLICATION

(11) **EP 2 295 945 A2**
(43) Date of publication of application: **16.03.2011**
(21) Application number: 09013899.1
(22) Date of filing: 05.11.2009
(51) Int. Cl.: G01K 11/00, A21B 1/42, A47J 37/04

(54) **Microwave-Radiometry-Dectector and heat-treatment device comprising such a detector**

(30) Priority: 11.09.2009 EP 09011660
(71) Applicant: CFS Bakel B.V., 5761 EN Bakel (NL)
(72) Inventor: Rens van, Joseph Johan Maria, 6003BK Weert (NL)
(74) Representative: Wolff, Felix

(57) **Abstract**

The present invention relates to a Microwave-Radiometry-Detector for measuring the core temperature of a piece of protein containing substance, such as meat, used in an oven.
The detector has a receiving area (2) of 1-180 mm².

## Description

The present invention relates to a Microwave-Radiometry-Detector for measuring the core temperature of a piece of protein containing substance, such as meat.

Food products, especially protein containing food products, such as meat, are often heat treated. In industrial applications, this heat treatment takes place in a heat-treatment device, for example an oven, which comprises a belt, preferably an endless belt, which moves the products through the oven, where they are subjected to heat. In many cases, several products are transported side by side, in parallel rows, or in an arbitrary arrangement, through the oven. Since the temperature-distribution and/or the heat-transfer is not uniform over the width of the oven, the pasteurization of the individual product is also not uniform, which is, however, often undesired. It is especially undesired to have products with a too low core temperature and/or overcooked products.

It is therefore the objective of the present invention to provide a Microwave-Radiometry-Detector for measuring the core temperature of a protein containing substance.

The problem is solved with a Microwave-Radiometry-Detector for measuring the core temperature of a piece of protein containing substance, which has a receiving area of 0,1-180 mm²_{.}

The present invention relates to a Microwave-Radiometry-Detector. Such a Microwave-Radiometry-Detector detects radiation in a bandwidth of 0,3 to 300 GHz. This detector and the connected electronics are for example known from WO 2006/070142, WO 2006/070143, WO 2006/070144, US 4,650,345 and US 5,176,146, which are incorporated herewith by reference and are therefore part of the present application. The core temperatures measured by the described detectors are not precise enough to control a process based on that data.

It has now been found, that a detector with a receiving area of 0,1 - 180 mm², measures the core temperature of a protein containing substance very precise. The receiving area is the area of the detector, which receives the microwave radiation emitted by a product. The core temperature is the temperature, averaged over the height z of the product under the detector.

The detector preferably does not touch the product, but is placed in the direct vicinity of the product to receive the microwave radiation emitted by the product.

A protein containing product is especially meat, for example from swine, cow, chicken, lamb as well as fish. The meat may comprise bones or fish-bones. The meat is preferably processed, for example minced, marinated, spiced and/or battered Preferably, the receiving area is 0,1 - 70 mm², more preferably 0,1 - 40 mm² and most preferably 0,1 - 20 mm².

The receiving area may have any shape. However, preferably, the receiving area is circular. In a preferred embodiment of the present invention, the receiving area has a diameter of 0,35 - 15,1 mm, more preferably 0,35 - 9,4 mm, even more preferably 0,35 - 7,13 mm, even more preferably 0,35 - 5,0 mm.

Preferably, the detector and the accompanying electronics detects and analyzes microwaves in a frequency band between 1 -7 GHz, whereas low frequencies around a frequency band between 2 - 4 GHz are more preferred and a frequency band between 2,8 and 3,2 GHz is most preferred. In an even more preferred embodiment the frequencies received and analyzed by the detector and the accompanying electronics is altered during one measurement, whereas low frequencies provide information about the temperature deep inside the product and higher frequencies information about the temperature of product nearer to the surface.

The inventive microwave-radiometry-detector is preferably part of a heat treatment device for protein containing substances.

Another subject matter of the present invention is therefore a device for the heat treatment of protein containing products comprising the inventive microwave-radiometry-detector.

Preferably, this heat treatment device is an oven that heats products by radiation, natural- and/or forced convection. Vapor can be added to the heat treatment device if needed. This oven can be operated continuously or batch-wise. Preferably, the heat treatment device comprises several chambers in which different heat -treatment- conditions and/or environments are maintained. The oven comprises preferably means to control different parameters such as the temperature, the relative humidity and/or the convection in the oven.

Preferably, the device comprises transportation means, for example a belt, especially an endless belt, which transport products through the device. The path of the transportation device can be straight and/or curved, for example arranged at least partially helically. The transportation device preferably has a width, i.e. the extension perpendicular to the transport direction, which is large enough to place several products side by side, which are then transported in parallel through the heat treatment device. The product can, however, also be placed at random on the belt, for example in case of manual loading.

Preferably, the detector according to the present invention is placed above the transportation means, to measure the core temperature of the products, which pass by below this detector. The detector is preferably stationary. The detector is preferably located near the exit of the heat treatment device.

In a preferred embodiment of the present invention, at least two detectors are placed above the transportation means. These detectors preferably measure the core temperature of the products on the left hand side and on the right hand side of the transportation means relative to the transport direction of the belt, which are transported past the detectors.

In another preferred embodiment, one detector is placed above each row. Each of these detectors measures the core temperature of the consecutive products arranged in the respective row.

According to a preferred embodiment of the present invention, the heat treatment device comprises means to influence the heat treatment process. Such means can be, for example, means to alter the temperature, means to influence the heat transfer, means to provide radiation, residence time of the product in the oven and/or means to alter the relative humidity of the environment around the products. These means can be used to provide uniform heat treatment conditions over the entire widths of the transportation means or to provide non uniform heat treatment conditions, in case, the number of products per unit area on the transportation means differs as a function of the width of the transportation means. In this case, it can be desirable, to provide more heating energy and/or more efficient heat transfer in the area with more products per unit area than in the area with less products per unit area. Theses means to influence the heat treatment process are, in a preferred embodiment of the present invention, controlled according to the signal of the detector. This detector is for example placed at or near the exit of the heat treatment device, for example the oven, and measures the core-temperature of the individual product. Based on this measurement, the heat treatment process is altered, to achieve an optimal core-temperature.

In another preferred embodiment, the device comprises means to track the position of the individual product. This means can be for example an XY tracking system and is for example useful to know where an individual product is at a certain instant. This information can be for example used to sort out products for example by a Pick and Place Robot, which do not meet certain quality criteria especially which do not meet a certain core temperature; i.e. if the core temperature is either too high or too low, theses products are sorted out by the Pick and Place Robot. This robot needs the XY coordinates of this product to be sorted out, in order to pick the right product from the transportation means.

In another preferred embodiment, the temperature information acquired by the inventive detector is stored in storing means. This information can be for example used as a quality control function to document how the individual product has been heat-treated in the heat treatment process. According to another preferred embodiment, this information is transferred to storing means, for example a transponder, which is attached to a packaging or the like in which the product is placed and packed. In case of a quality problem, the information can be directly read out of this transponder and is available to the merchandiser or the customer.

According to a preferred embodiment or another embodiment of the present invention, the heat treatment device comprises product detection means, which are located upstream of the heat treatment device. These means can be used to at least partially turn the heat treatment device on and off. In case, that no products are on the transportation means, the heat treatment device is at least partially turned off. However, as soon as theses detections means identify a product, the heat treatment device is turned on again well before the product arrives at the heat treatment device. With this preferred or inventive embodiment of the present invention, energy of the heat treatment process can be saved.

The inventions are now explained according to Figures 1-7. These explanations do not limit the scope of protection.
Figure 1 shows the inventive detector.
Figure 2 shows the measurement principle
Figure 3 shows one embodiment of the inventive device with two detectors.
Figure 4 shows the inventive device with one detector per row.
Figure 5 shows one embodiment with a multitude of detectors.
Figure 6 shows the product identification device.
Figure 7 shows means to influence the heat treatment process over the width of the belt

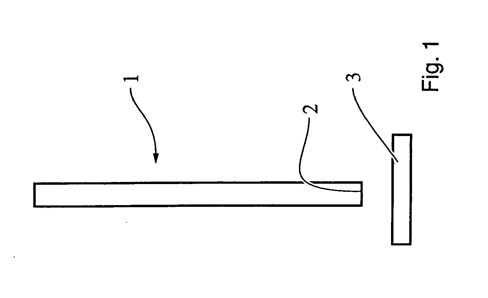

**Figure 1** shows the inventive microwave radiometry detector, which has a receiving area 2, which is directed towards the product 3 and receives microwave radiation emitted by the product. The product 3 is in the present case a piece of meat, which is subjected to a heat treatment. In the present case, the receiving area is a circle with a diameter of six millimeters. The detector is electrically and electronically connected to analyzing means, which are not shown. In the present case, the detector and/or the accompanying electronics comprises a filter that allows microwaves in a band width of 2-4 GHz to pass. The connected electronics analyses this received microwave radiation and calculates the core temperature of the product 3; i. e. the temperature in the center of product 3.

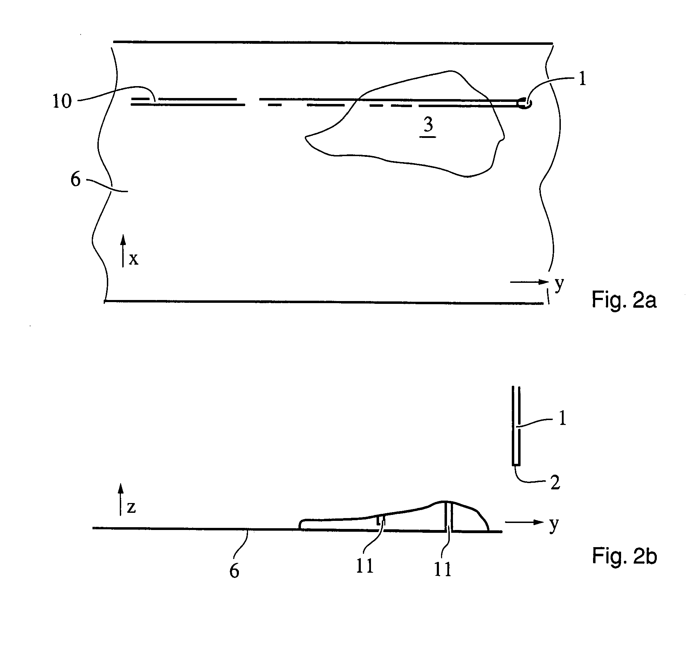

**Figure 2** depicts the measurement principle of the present invention. Figure 2a is a top-view of a transportation belt 6 that moves from the left to the right. Above the belt, a detector 1 is arranged, whose receiving area 2 is directed towards the belt 6. On the belt 6, a food product is placed and transported past the detector 1. The detector measures the core temperature of product within the measurement path. Since the receiving area 2 of the detector is very small, the temperature measured is exactly the core temperature of the product in this path and not the temperature over the entire product in x-direction. As can be seen in figure 2b, which is a side-view of the depiction according to figure 2a, in this measurement path, the temperature is measured at several, here two, discrete points 11, which can, however have such a small distance, that a semi-continuous measurement is achieved. At every measurement point, the mean temperature of the product under the receiving area is determined. The person skilled in the art understands that in case several detectors are placed side by side a very exact temperature map of the product can be determined.

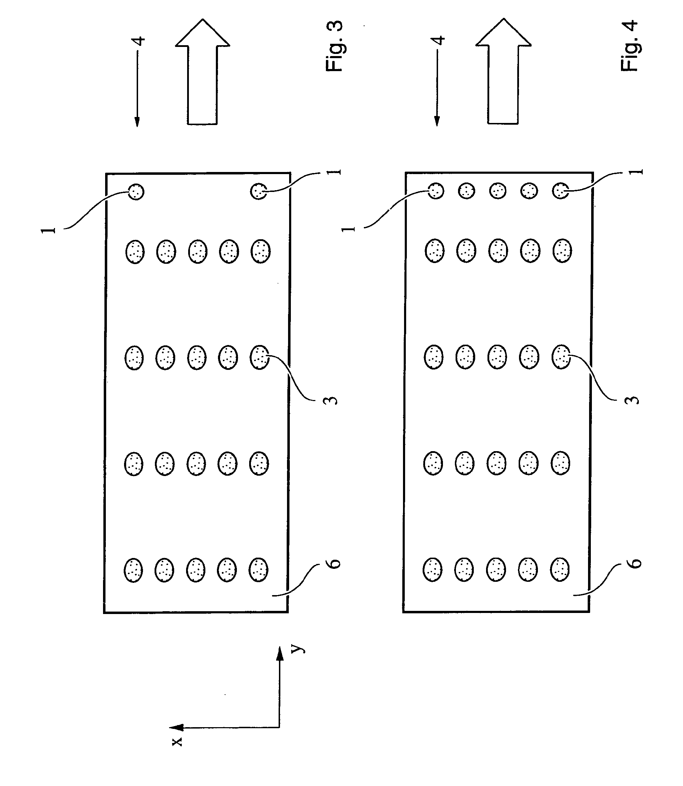

**Figure 3** shows one example of the inventive device, which is in the present case an oven (not depicted), which comprises transportation means, here a transportation belt 6. This transportation belt moves the product along the heat treatment device. These products are spread over the entire width of the belt. Here, five rows 4 of products 3 are placed side by side over the width of the belt. The large arrow depicts the transportation direction of the belt. At or near the exit of the heat treatment device, on the left and on the right hand side, a microwave-radiometry-detector 1 is arranged, respectively, which measures the core temperature of the products in this area. Preferably, the device comprises means to influence the heat treatment process, which are preferably controlled based on the signal of the two detectors 1. In case, a uniform heat treatment of all products is desired, these means will be controlled based on the signal of the detector 1. In a preferred embodiment, the device comprises an XY-tracking system, whereas the X-direction is the direction perpendicular to the transportation direction and the Y-direction is the direction in the transportation direction. This XY-tracking system can be for example part of the transportation belt, whereas the X-position is set by the distribution of the products in the direction perpendicular to the transportation direction. The Y-direction can be for example acquired by using a sensor, which senses the motion of the belt, for example, a servo motor, which permanently provides signals about its rotation position and thus, information about the movement of the belt and the actual position of each product. In case that a product has not been sufficiently heat-treated or overheated, this XY-information can be used to sort out this product, by providing the X and Y information for example to a robot, which picks the individual product from the belt and either puts it into a waist bin or recycles it, so that it is heat-treated again.

**Figure 4** essentially shows the device according to figure 2. However, in this case, a detector 1 is located above each row 4 of products 3. In this case, the signal of the detectors 1 can be used to control the means to influence the heat treatment process 5 and/or to monitor, acquire and/or the core temperature of each product treated in the oven. The data received by the detector can be analyzed once or several times, so that data across the product along a line can be acquired and temperature distribution in the product along this line is known. The XY tracking system can be used to allocate each temperature measurement a coordinate in the product.

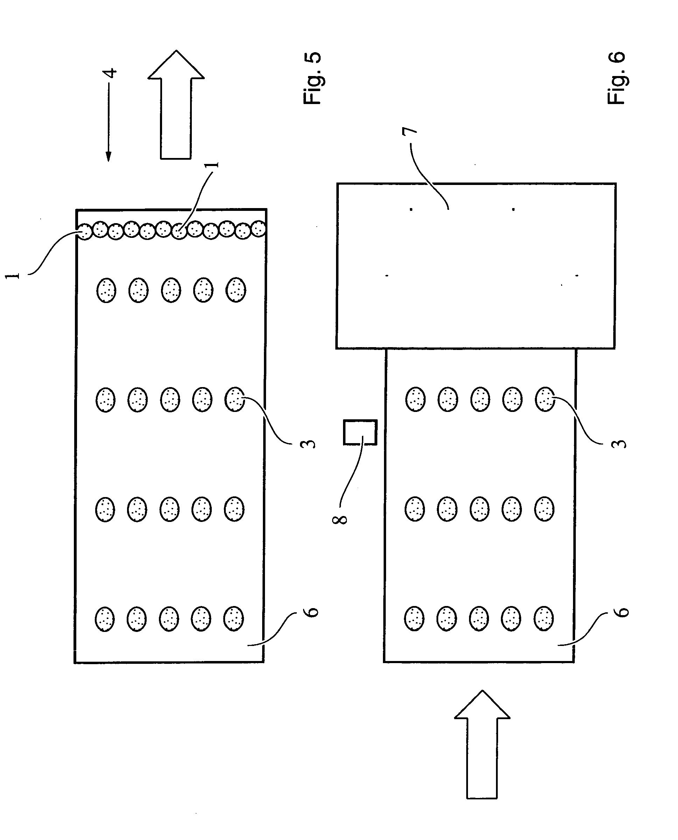

**Figure 5** shows yet another preferred embodiment of the inventive devices. Again, reference is made to the descriptions according to figures 2 and 3. However, in the present case, the distribution of the detectors 1 over the width of the belt is even denser, so that each product is at least analyzed by one, if not more detectors. This signal can be used to control the process and to acquire data of several detectors per product. The data can be stored. Due to the dense distribution of the detectors 1, not only one but a multitude of data is acquired of each product, so that even a temperature distribution in the product can be measured. With this data, it is even possible to create an image of the product, so that its size, its orientation and/or the location of a bone in the product is known.

The data especially acquired with devices according to figures 3 and 4 can be stored in a data acquisition unit in order to monitor the quality of the heat treatment of each individual product.

Regarding **Figures 3, 4****,** **5** **, and** **7**, the person skilled in the art understands, that the detectors 1 can be stationary or can be moved in order to take data at different X-positions. The person skilled in the art also understands that the detectors need not be identical and/or that the analysis of the data acquired by each detector need not be identical. Regarding these figures, the person skilled in the art also understands that arrangement of the products on the belt can be also arbitrary.

**Figure 6** shows yet another embodiment of the present invention. In this case, in front of oven 7, product detection means 8 are placed in the vicinity of a belt 3, which transports product 3. In the instant depited, the detector 8 detects no products, so that it provides a signal, for example, to turn down the heating energy and/or the ventilation in the oven. However, as soon as the next product passes the detector 8, this signal is sent to a control unit, which turns, for example, the heat on again, so that, as soon as this product enters the oven, the oven is sufficiently heated. Again, the direction of transport of belt 3 is depicted by the large arrow.

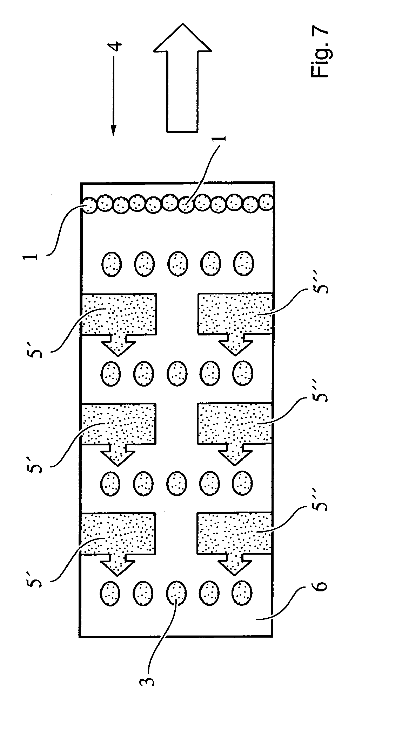

The embodiment according to **figure 7** is essentially the embodiment according to figure 4. However, in this case, means to influence the heat treatment process 5 are depicted. Based on the data acquired by the detectors 1, the means 5' on the left hand side and 5" on the right hand side are controlled to either increase or decrease the heat treatment in this area, so that a uniform heat treatment of all products is achieved.

### List of reference signs:

- 1: Microwave-Radiometry-Detector
- 2: receiving area
- 3: product
- 4: row
- 5: means, to influence the heat treatment process
- 5': left side
- 5'': right side
- 6: transportation means in the heat treatment device 7
- 7: heat treatment device, oven
- 8: product detection means
- 9: transportation means before the heat treatment device
- 10: measurement path
- 11: measurement points

## Claims

1. Microwave-Radiometry-Detector (1) for measuring the core temperature of a piece of protein containing substance, characterized that is has a receiving area (2) of 1 - 180 mm².

2. Microwave-Radiometry-Detector (1) according to claim 1, **characterized in, that** the receiving area is 0,1 - 70 mm², more preferably 0,1 - 40 mm² and most preferably 0,1 - 20 mm².

3. Microwave-Radiometry-Detector (1) according to claims 1 or 2, **characterized in, that** receiving area is circular surface.

4. Microwave-Radiometry-Detector (1) according to claim 3, **characterized in, that** the receiving area has a diameter of 0,35 - 15,1 mm, more preferably 0,35 - 9,4 mm, even more preferably 0,35 - 7,13 mm, even more preferably 0,35 - 5,0 mm.

5. Microwave-Radiometry-Detector (1) according to one of the preceding claims, **characterized in, that** it detects microwaves in a frequency band between 1 -7 GHz.

6. Microwave-Radiometry-Detector (1) according to claim 5, **characterized in that** it detects microwaves in a frequency band between 2 - 4 GHz, preferably 2,8 and 3,2 GHz.

7. Device for the heat treatment of protein containing products (3) comprising the microwave-radiometry-detector (1) according to one of the preceding claims.

8. Device according to claim 7, **characterized in that** it comprises transportation means (2), which transport products (3) through the device.

9. Device according to claim 8, **characterized in, that** a multitude of rows (4) are transported simultaneously through the device.

10. Device according to one of claims 8 or 9, **characterized in, that** at least two detectors (1) are placed above the transportation means.

11. Device according to claim 9, **characterized in, that** at least one, detector is placed above each row (4).

12. Device according to one the preceding claims, **characterized in, that** it comprises means (5) to influence the heat treatment process, which are controlled according to the signal of the detector (1).

13. Device according to one of the preceding claims, **characterized in, that** it comprises means to track the position of an individual product (3).

14. Device according to one of the preceding claims, **characterized in, that** it comprises means to store the data acquired by the detector (1).

15. Device according to one of the preceding claims, **characterized in, that** it comprises means to sort out undesired products.
